## Europäisches Patentamt
## European Patent Office
## Office européen des brevets

(11) Veröffentlichungsnummer: **0 025 597**
**B1**

(12) # EUROPÄISCHE PATENTSCHRIFT

(45) Veröffentlichungstag der Patentschrift: 23.06.82

(51) Int. Cl.³: **C 02 F 3/12**

(21) Anmeldenummer: 80105461.0

(22) Anmeldetag: 12.09.80

(54) Verfahren und Anlage zur Abwasserreinigung mittels Belebtschlamm.

(30) Priorität: 12.09.79 DE 2936884

(43) Veröffentlichungstag der Anmeldung:
25.03.81 Patentblatt 81/12

(45) Bekanntmachung des Hinweises auf die Patenterteilung:
23.06.82 Patentblatt 82/25

(84) Benannte Vertragsstaaten:
BE FR NL

(73) Patentinhaber: Schreiber, August, Dr. Ing.,
Bahnhofstrasse 45, D-3001 Hannover-Vinnhorst (DE)

(72) Erfinder: Schreiber, August, Dr. Ing., Bahnhofstrasse 45,
D-3001 Hannover-Vinnhorst (DE)
Erfinder: Schreiber, Berthold, Dipl.-Ing.,
Bahnhofstrasse 45, D-3001 Hannover-Vinnhorst (DE)

(74) Vertreter: Schmidt-Evers, Jürgen et al, Patentanwälte
Dipl.-Ing.H.Mitscherlich Dipl.-Ing.K.Gunschmann
Dr.rer.nat.W.Körber Dipl.-Ing.J.Schmidt-Evers,
Steinsdorfstrasse 10 D-8000 München 22 (DE)

(56) Entgegenhaltungen:
DE-A-2 333 675
DE-A-2 427 550
DE-A-2 616 212
DE-A-2 757 860
DE-A-2 805 094
DE-A-2 826 922
DE-A-2 852 546
FR-A-2 337 107
GB-A-1 225 157
US-A-3 342 727
US-A-4 159 243

GWF — DAS GAS UND WASSERFACH — R. Oldenbourg Verlag GmbH, München, 1977, 118. Jahrgang, Ausgabe Wasser/Abwasser, Heft 3, WERNER HEGEMANN, »Mathematische Modelle zur Prozeßsteuerung von Belebungsanlagen — eine Bestandsaufnahme«, Seiten 121—125
PATENT ABSTRACTS OF JAPAN, unexaminated applications, Sektion M, Band 2, Nr. 74, 10. Juni 1978, THE PATENT OFFICE JAPANESE GOVERNMENT, Seite 1721, M 78

Verfahren und Anlage zur Abwasserreinigung mittels Belebtschlamm

Die Erfindung betrifft ein Verfahren und eine Anlage zur Abwasserreinigung mittels Belebtschlamm gemäß dem Oberbegriff des Anspruchs 1 bzw. dem Oberbegriff des Anspruchs 3.

Bei einem vom Anmelder entwickelten Verfahren und einer Anlage zur Abwasserreinigung, die nach der DE-A1-2 757 860 bekannt sind, wird zu reinigendes Abwasser in einem Reaktionsbecken, einem Belebungs- oder Belüftungsbecken, einem Nachklärbecken und einer den rücklaufenden Belebtschlamm aus dem Nachklärbecken aufnehmenden Schlamm-Rückförderanlage behandelt. Bei Abwasserreinigungs-Anlagen dieser Art soll erreicht werden, daß sowohl der chemische $O_2$-Bedarf als auch der biologische $O_2$-Bedarf weitgehend abgebaut wird und daß der Stickstoff ausgeschieden wird.

Bekanntlich wird bei nitrit-/nitrathaltigem Abwasser, das mit Belebtschlamm vermischt ist, schon nach kurzer Zeit der Sauerstoff verbraucht und entweicht der Stickstoff der Nitrite/Nitrate in die Atmosphäre. Bei dem Verfahren und der dieses Verfahren anwendenden Abwasserreinigungs-Anlage gemäß der DE-A1-2 757 860 wird zwar ein sehr großer Teil des Stickstoffs ausgeschieden, jedoch ist dies auch durch gezielte Konstruktion und durch gezielte Betriebsweise nicht steuerbar.

Es ist Aufgabe der Erfindung, die Stickstoff-Ausscheidung weitgehend sicherzustellen und die zum großen Teil nachteiligen Einflüsse für die Denitrifikation zu überwinden.

Die Aufgabe wird erfindungsgemäß durch die kennzeichnenden Merkmale des Anspruchs 1 bzw. des Anspruchs 3 gelöst.

Bei der Erfindung wird somit die Stickstoff-Ausscheidung mittels einer Steuereinrichtung sichergestellt und kann, da die Nitrifikation von stickstoffhaltigen Verunreinigungen des Abwassers von der Konzentration, der Temperatur und sonstigen Verhältnissen abhängt, die Verweilzeit für die Nitrifikation und die Denitrifikation unterschiedlich lang gemacht werden. Dabei werden neben besserer Reinigung auch geringere Strom- und Baukosten sowie größere Betriebssicherheit erreicht.

Bei der Erfindung wird das Rohabwasser entsprechend der DE-A1-2 757 860 gereinigt, wobei jedoch die Belüftung der jeweiligen Becken nicht kontinuierlich durchgeführt wird. Vielmehr werden sowohl das Belüftungs- bzw. Belebtschlammbecken und das Reaktionsbecken vorteilhaft als (zumindest) zwei gleich große Anlagenteile parallel nebeneinander ausgebildet, wobei die beiden Anlagenteile intermittierend und einstellbar für eine vorgegebene Zeit bis zum Erreichen der Nitrifikation belüftet werden, wobei die dafür notwendige Luftversorgung mittels eines einstellbaren und ggf. schaltbaren Zeit/Pausen-Steuergerätes mit zugehörigen Einrichtungen nach dem Erreichen der Nitrifikation von dem einen Becken zu dem zweiten Becken umgeschaltet und dann dort die weitere biologische Reinigung und Nitrifikation durchgeführt wird. Während dieser Zeit erfolgt in dem ersten Anlagenteil keine Luftzufuhr, weshalb das sich im Belebtschlamm-Wassergemisch entwickelte Nitrat infolge sich schnell verbrauchenden $O_2$-Gehaltes durch Mikroorganismen verbraucht wird und der Stickstoff gasförmig in die Atmosphäre entweichen kann. Durch laufende Wiederholung dieser Vorgänge wird der Stickstoff, der normalerweise für die Vorflut nachteilig ist, entfernt.

Vor Einleiten in das Belüftungsbecken wird zufließendes Rohabwasser in das Reaktionsbecken eingeleitet und mit dem Rücklaufschlamm aus dem Nachklärbecken vermischt. Bereits dadurch wird ein Teil des Stickstoffs aus dem nitrathaltigen Rücklaufschlamm entfernt, so daß das zugeführte Rohabwasser bis zu einem bestimmten Grad insbesondere bezüglich Verschmutzung und Stickstoff-Gehalt und -konzentration vorgereinigt und erst dann dem Belüftungs- bzw. Belebungsbecken zugeleitet wird. In dem Belüftungsbecken wird das Abwasser weiter von den Verschmutzungen befreit, weshalb die Ableitung der gereinigten Abwässer in ein öffentliches Gewässer weit weniger nachteilig ist als bei einer üblichen biologischen Abwasserreinigung.

Der Reinigungsprozeß geht in gleicher Weise vor sich wie bei der DE-A1-2 757 860. Wie dort sind die dafür erforderlichen Zuleitungen zur Mitte des Reaktionsbeckens mit Zweigleitungen versehen, so daß die Versorgung in der in der DE-A1-2 757 860 erläuterten Weise wahlweise durchführbar ist.

Vorzugsweise erfolgt die Belüftung bei der Erfindung in der in der DE-A-2 757 860 erläuterten Weise mittels einer umlaufenden durchgehenden Belüftungsbrücke mit bis zur Beckensohle reichenden Belüftern, wodurch sowohl die Belüftung als auch das Inschwebehalten des Belebtschlammes sowohl im Belüftungsbecken als auch im Reaktionsbecken erreicht wird.

Um die Ausscheidung des Stickstoffs weitgehend und sicher zu erreichen, werden, wie erläutert, durch steuerbares bzw. einstellbares Ab- und Zuschalten der Luftzufuhr zur Belüftung vorübergehend sauerstoffarme, sauerstofflose und sauerstoffreiche Zonen in entweder dem einen oder dem anderen Anlagenteil geschaffen. Dadurch wird es möglich, die verschiedenen Einflüsse von Abwassermenge, Verschmutzung, Temperatur und sonstigen Einwirkungen zu berücksichtigen und dabei die optimale Zeit für sowohl die Nitrifikation als auch für die Denitrifikation zu erreichen, wodurch der Reinigungsvorgang auf das beste gefördert wird.

Die notwendige Belüftung, deren Dauer, wie erwähnt, mittels des Zeit/Pausen-Steuergerätes einstellbar ist, wird der Menge nach mittels einer Verdichtereinheit erreicht, die einen mehrstufigen oder mehrere gleichzeitig betreibbare Kompressoren enthält. Das Zu- und Abschalten der Kompressoren wird ebenfalls mittels des Zeit/Pausen-Steuergerätes abhängig von einer im Belüftungsbecken vorgesehenen Sonde erreicht. Da die Belüftungsrohre innerhalb der Becken nicht laufend, sondern nur während der Belüftungszeiten und nicht während der Belüftungspausen beschickt werden, sind die Austrittsöffnungen der Belüfterrohre vorzugsweise so ausgebildet, daß sie sich beim Abstellen der Luftzufuhr nicht mit Wasser auffüllen, sondern luftgefüllt bleiben. Vorteilhaft kann dies dadurch erreicht werden, daß auch wähernd der Belüftungspause eine kleine Menge an Luft den nicht beschickten Belüftern zugeführt wird, um deren Verstopfung zu verhindern. Diese Luft kann über steuerbare Schieber einem Druckluft-Ausgleichsbehälter zur Dämpfung von Luftstößen über eine Bypass-Leitung entnommen werden. Es ist zweckmäßig, wenn eine kurzzeitige Vorentschlammung zum Ausscheiden des gröbsten Rohschlammes vorgesehen ist.

Die Erfindung wird durch die Merkmale der Unteransprüche weitergebildet.

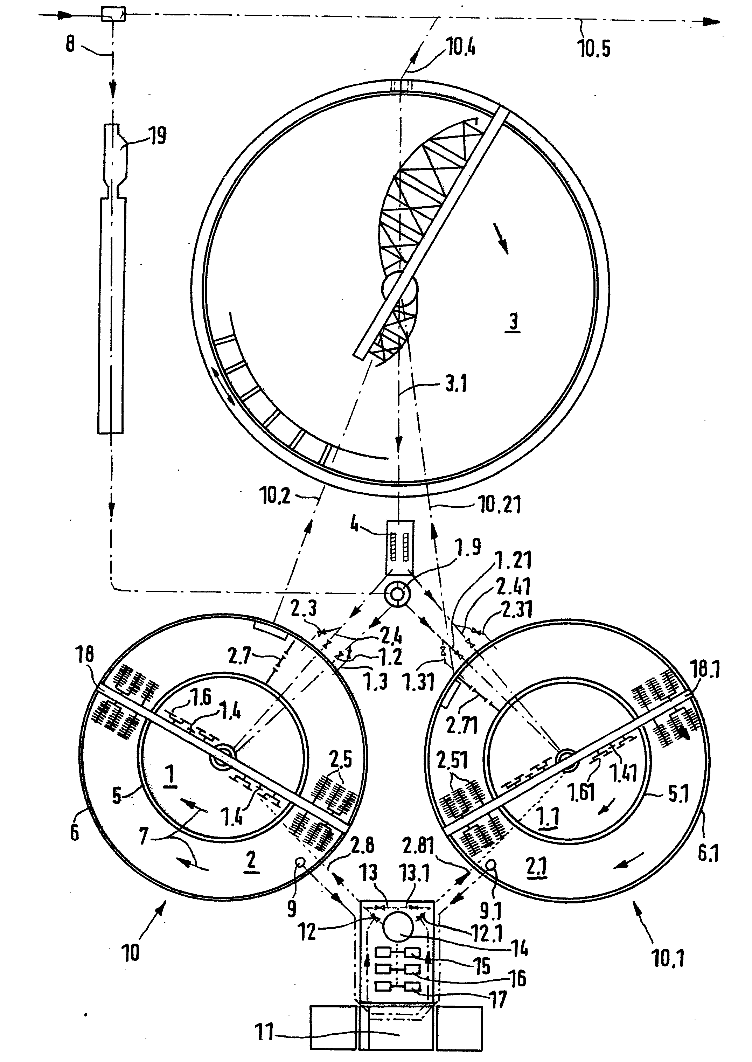

Die Erfindung wird anhand des in der Zeichnung dargestellten Ausführungsbeispiels erläutert. Die einzige Figur zeigt in Aufsicht eine erfindungsgemäß ausgebildete Abwasserreinigungsanlage mit zwei Anlagenteilen.

In der Zeichnung sind dargestellt zwei Reaktionsbecken 1 und 1,1, zwei je einem Reaktionsbecken 1, 1,1 zugeordnete Belüftungsbecken 2 bzw. 2,1, ein beiden Belüftungsbecken 2, 2,1 zugeordnetes Nachklärbecken 3, eine Rückfördereinreihtung 4 für den Belebtschlamm aus dem Nachklärbecken 3. Die Reaktionsbecken 1, 1,1 weisen eine Umfassungswand 5 bzw. 5,1 auf, durch die das Reaktionsbecken 1, 1,1 von dem zugeordneten Belüftungsbecken 2, 2,1 getrennt ist. Die Belüftungsbecken 2, 2,1 weisen jeweils eine äußere Umfassungswand 6 bzw. 6,1 auf. Durch das Reaktionsbecken 1 und das Belüftungsbecken 2 wird ein Anlagenteil 10 und durch das Reaktionsbecken 1,1 und das Belüftungsbecken 2,1 wird ein Anlagenteil 10,1 gebildet. Jedes Anlagenteil 10, 10,1 weist eine in Richtung des Pfeils 7 umlaufende Belüftungsbrücke 18 bzw. 18,1 auf, wobei an den Brücken 18, 18,1 Belüfter 1,6 bzw. 1,61 vorgesehen sind. In den Anlagenteilen 10, 10,1, insbesondere im Belüftungsbecken 2, 2,1 sind Sonden 9 bzw. 9,1 vorgesehen.

Der gesamten Abwasserreinigungsanlage wird Rohwasser über einen Zulauf 8 zugeführt, wobei das Rohabwasser zunächst in einen Verteilerschacht 1,9 eintritt und dann über mit Schiebern versehene Leitungen 1,2 bzw. 1,21 bis zur Mitte der Reaktionsbecken 1 bzw. 1,1 geführt wird. Von dem Reaktionsbecken 1, 1,1 tritt das Abwasser-Schlammgemisch über den gesamten Umfang der Umfassungswand 5 bzw. 5,1 der Reaktionsbecken 1, 1,1 in die Belüftungsbecken 2, 2,1 über. Dort wird es belüftet und strömt über Ausläufe und Leitungen 10,2 bzw. 10,21 zur Mitte des Nachklärbeckens 3. Über einen Auslauf 10,4 tritt das gereinigte Abwasser über eine Abflußleitung 10,5 in den Vorfluter ein.

Über eine Leitung 3,1 fließt konzentrierter Belebtschlamm in die Rückführeinrichtung 4 ein. Von dort wird er über mit Schiebern versehene Zuführleitungen 2,4 bzw. 2,41 der Mitte des Reaktionsbeckens 1 bzw. 1,1 zugeführt.

Wie in der DE-A1-2 757 860 erläutert, wird dem jeweiligen Belüftungsbecken 2, 2,1 auch ein Teil des Rohwassers über eine mit Schiebern versehene Zweigleitung 1,3 bzw. 1,31 zugeführt und wird Belebtschlamm von der Rückfördereinrichtung 4 über Zweigleitungen 2,3 bzw. 2,31 zugeführt.

Dabei kann das über die Zuleitung 8 zugeführte Rohabwasser über ein Vorbauwerk 19 dem Verteilerschacht 1,9 zugeführt werden und wird der an der Unterseite des Nachklärbeckens 3 entnommene konzentrierte Belebtschlamm in der Rückfördereinrichtung 4 mittels einer Schneckenpumpe oder dergleichen gehoben, damit er den Anlagenteilen 10, 10,1 in geeigneter Weise zuführbar ist.

Darüber hinaus kann, wie in der DE-A1-2 757 860 beschrieben und hier nicht im einzelnen dargestellt, ein Teil des aus dem Belüftungsbecken 2, 2,1 austretenden und dem Nachklärbecken zuzuführenden Gemisches dierkt der Rückfördereinrichtung 4 zugeführt werden.

Vorteilhaft wird bei gleicher Baugröße der Anlagenteile 10 und 10,1, diesen die gleiche Rohabwassermenge über die Leitung 1,2 bzw. 1,21 zugeführt.

Die zur Belüftung erforderliche Luft wird über eine Verdichtereinheit angesaugt, die beim dargestellten Ausführungsbeispiel aus einem Kompressor 15 für geringste Belastung (wie für Nachtzeiten), aus einem Kompressor 16 für mittlere Belastung und aus einem Kompressor 17 für größte Belastung gebildet ist. Selbstverständlich kann auch ein einziger in mehreren Stufen betreibbarer Kompressor oder können mehrere Kompressoren unterschiedlicher oder auch gleicher Leistung verwendet werden. Die angesaugte Luft wird einem Luftdruckstoß-Dämpfer 14 zugeführt, von dem aus die Druckluft über Luftzuführrohre 2,8 bzw. 2,81 den Brücken 18 bzw. 18,1 vorzugsweise über deren Drehmitte zugeführt wird. Die Luft tritt über die Belüfter 1,6 bzw. 1,61 in das Reaktionsbecken 1 bzw. 1,1 und über Belüfter 2,5 bzw. 2,51 in das Belüftungsbecken 2 bzw. 2,1 ein. An der Brücke können dazu insbesondere im Reaktionsbecken 1 bzw. 1,1 noch Rührwerke 1,4 bzw. 1,41 vorgesehen sein.

Weiter ist ein Zeit/Pausen-Steuergerät 11 vorgesehen, das abhängig von Signalen von Sonden 9 und 9,1 im Anlagenteil 10 bzw. im Anlagenteil 10,1, insbesondere deren Belüftungsbecken 2 bzw. 2,1 die Öffnung von Ventilen oder Schiebern 12 bzw. 12,1 am Ausgang des Luftdruckstoß-Dämpfers 14 steuert, um auf diese Weise entweder Luft in das Luftzufuhrrohr 2,8 oder in das Luftzufuhrrohr 2,81 einzuführen.

Der Schieber 12 ist dabei von einer Bypass-Leitung 13 mit Schieber und der Schieber 12,1 ist dabei von einer Bypass-Leitung 13,1 mit Schieber umfahrbar, derart, daß bei geschlossenem Schieber 12 bzw. 12,1 und geöffnetem Bypass 13 bzw. 13,1 eine geringe Luftmenge den Luftzuführrohren 2,8 bzw. 2,81 zugeführt werden kann.

Schließlich kann, wie bei der DE-A1-2 757 860 in dem Belüftungsbecken 2 bzw. 2,1 eine radiale Trennwand 2,7 bzw. 2,71 in der dort erläuterten Anordnung und zum dort erläuterten Zweck vorgesehen sein.

Der Betrieb der erfindungsgemäßen Abwasserreinigungsanlage wird so durchgeführt, daß das zu reinigende Rohabwasser möglichst gleichmäßig auf beide Anlagenteile 10 und 10,1 verteilt wird. Die Belüftung der Belüftungsbecken 2 bzw. 2,1 wird so durchgeführt, daß das eine Belüftungsbecken 2 während einer vorgegebenen Zeit über den geöffneten Schieber 12 und bei geschlossenem Schieber 12,1 mit Luft versorgt wird, während anschließend daran das andere Belüftungsbecken 2,1 bei geöffnetem Schieber 12,1 und geschlossenem Schieber 12 mit Luft versorgt wird. Die beiden Anlagenteile 10 und 10,1 werden also hintereinander belüftet. Während der Schieber 12 für die Luftzufuhr zum Anlagenteil 10 geschlossen wird, wird der Schieber 12,1 für die Luftzufuhr zum Anlagenteil 10,1 geöffnet. Dann wird das Belüftungsbecken 2,1 während einer bestimmten vorgegebenen Zeit belüftet. Dann wird der Schieber 12,1 für die Luftzufuhr zum Anlagenteil 10,1 geschlossen und der Schieber 12 zur Luftzufuhr zum Anlagenteil 10 wieder geöffnet, wodurch nun die Belüftung des Anlagenteils 10 erfolgt. Die aufeinanderfolgende Belüftungszeit und Belüftungspause für die Anlagenteile 10 und 10,1 wird so gewählt, wie es sich nach gesammelten Erfahrungswerten als am zweckmäßigsten ergibt.

Wie erwähnt, sind für die Luftversorgung mehrere Kompressoren 15, 16, 17 sowie ggf. zusätzliche Reserven vorgesehen, die je nach der Belastung des Zuflusses aufgrund der Signale der Elektrosonden 9 bzw. 9,1 zu- bzw. abgeschaltet werden. Bei einem mehrstufigen Kompressor kann eine entsprechende Umschaltung erfolgen. Während der Nachtzeiten, in denen der Anlage am wenigsten Wassermenge und Verschmutzungsmenge zuläuft, schaltet das Zeit/Pausen-Steuergerät 11 ohne Änderungen der Belüftungszeit oder der Belüftungspause so lange, bis sich der Sauerstoffgehalt nicht über oder unter einem vorbestimmten $O_2$-Gehalt im Becken einstellt. Dabei sind die Zeitlängen der Belüftungszeit und der Belüftungspause so gewählt, daß das abfließende gereinigte Abwasser ausreichend nitrifiziert bzw. denitrifiziert wird.

Für die Zeit des geringsten Zulaufes, wie während der Nacht, wird beispielsweise ein Kompressor 15 geringster Fördermenge eingeschaltet, wodurch das Abwasser während einer bestimmten Zeit belüftet wird, und zwar so lange, bis der gewählte und notwendige Sauerstoff im Becken bzw. entsprechenden Anlagenteil 10, 10,1 erreicht wird. Dafür ist eine bestimmte Zeit erforderlich, die bei der Inbetriebnahme der Abwasserreinigungsanlage empirisch bestimmt wird. Ist der gewählte Sauerstoffgehalt des zu belüftenden Abwasser-Belebtschlammgemisches durch den ununterbrochenen Zulauf auf beispielsweise unter 1 mg/l $O_2$ abgesunken, wird ausgehend von Signalen der Sonde 9 beispielsweise der Schieber 12 für den Anlagenteil 10 geschlossen und gleichzeitig der Schieber 12,1 für den Anlagenteil 10,1 geöffnet bzw. umgekehrt. Dies läuft nun hintereinander intermittierend so ab, solange sich der Zulauf bezüglich Abwassermenge, Verschmutzung, Temperatur oder sonstiger Verhältnisse nicht ändert. Bei geänderter Abwasserkonzentration, bei Temperaturwechsel und bei anderen ungünstigen Verhältnissen wird eine Korrektur der Belüftungszeit und/oder der Belüftungspause vorgenommen, um die günstigste Reinigungswirkung erreichen zu können. Dies wird durch das Zeit/Pausen-Steuergerät erreicht. Sofern der Sauerstoffgehalt unter die eingestellte Höhe absinkt, wird ein weiterer Kompressor, beispielsweise der Kompressor 16, zugeschaltet, so daß eine größere Fördermenge an Luft erreicht wird, um so wiederum den Sauerstoffgehalt des Anlagenteils 10 bzw. 10,1 wieder auf den vorgegebenen Sauerstoffwert zu erhöhen und um zu erreichen, daß wieder eine Nitrifikation des Belebtschlamm-Wassergemisches innerhalb des Anlagenteils 10, 10,1 eintritt. Bei noch größer werdender zugeführter Wassermenge, Verschmutzung usw. wird ein weiterer, dritter Kompressor 17 zugeschaltet, wobei nun diese drei Kompressoren über den Schieber 12 bzw. 12,1 den Anlagenteil 10 bzw. 10,1 mit so viel Luft versorgen, daß trotz der großen Menge und der großen Verschmutzung der $O_2$-Gehalt des Belebtschlamm-Wassergemisches auf der gewählten gewünschten Höhe aufrechterhalten bleibt.

Geht jedoch die Belastung im Zulauf 8 hinsichtlich Menge und/oder Verschmutzung zurück, wird ausgehend von dem Ausgangssignal der Sonde 9, 9,1 schrittweise wieder einer der Kompressoren, beispielsweise der Kompressor 17, abgeschaltet, so daß eine Erhöhung des $O_2$-Gehaltes vermieden werden kann. Bei dem dargestellten Ausführungsbeispiel mit drei Kompressoren werden bei normalen Rohabwasserbedingungen zwei Kompressoren 15, 16 betrieben sein, bis entweder Höchstmengen anfallen, aufgrund deren der Kompressor 17 zugeschaltet wird oder bis die Nachtzeit kommt und nur mehr der Kompressor 15 betrieben wird. Auf diese Weise kann die Abwasserreinigungsanlage mit dem gleichen $O_2$-Gehalt eine Nitrifikation und eine Denitrifikation erreichen.

Bei der Erfindung wird somit erreicht, daß das Zeit/Pausen-Steuergerät 11, das mit der Sonde 9 bzw. 9,1 zusammenwirkt, eine bestimmte Belüftungszeit und eine bestimmte Belüftungspause einstellbar vorgeben kann, durch die der

niedrigste zulässige O$_2$-Gehalt im Belebt-schlamm-Wassergemisch erreichbar ist, wobei trotz der Stickstoffbeseitigung eine Abwasserreinigungsanlage erreicht ist, bei der mit geringsten Stromkosten eine weitgehende Reinigung erzielbar ist.

**Patentansprüche**

1. Verfahren zur Abwasserreinigung mittels Belebtschlamm, bei dem zu reinigendes Rohabwasser nacheinander einem eine Belüftung erreichenden Reaktionsbecken, einem eine Belüftung erreichenden Belüftungsbecken und einem Nachklärbecken zugeführt wird, wobei ein Teil des Rohabwassers direkt dem Belüftungsbecken züführbar ist, bei dem abgesetzter und konzentrierter Belebtschlamm aus dem Nachklärbecken zum Teil zum Reaktionsbecken und zum Teil zum Belüftungsbecken zurückgeführt wird, und bei dem die Mischung im Reaktionsbecken und das Gemisch im Belüftungsbecken in umlaufende Bewegung versetzt und abhängig vom O$_2$-Gehalt belüftet und umgewälzt wird und bei dem im Reaktionsbekken der Belebtschlamm in den unteren Schichten umgewälzt und eingedickt wird, dadurch gekennzeichnet, daß zumindest zwei je ein Reaktionsbecken und ein Belüftungsbecken enthaltende Anlagenteile parallel vorgesehen werden und daß bei sonst parallelem Betrieb die Anlagenteile intermittierend belüftet werden.

2. Verfahren nach Anspruch 1, dadurch gekennzeichnet, daß die Anlagenteile jeweils abhängig von Rohabwasserverschmutzung, Rohabwassermenge, Rohabwassertemperatur und jahreszeitlichen Witterungseinflüssen mit unterschiedlichen Mengen an Belüftungsluft versorgt werden.

3. Abwasserreinigungsanlage zur Durchführung des Verfahrens nach einem der Ansprüche 1 und 2, mit
einer Rohabwasserzuleitung (8),
einem mit Vorrichtungen zum vom O$_2$-Gehalt abhängigen Belüften versehenen Reaktionsbekken (1 bzw. 1,1),
einem mit Vorrichtungen zum vom O$_2$-Gehalt abhängigen Belüften versehenen Belüftungs-becken (2 bzw. 2,1),
einem Nachklärbecken (3),
einer Abflußleitung (10, 5) des geklärten Abwassers aus dem Nachklärbecken (3),
einer Rückführeinrichtung (4) mit Förderanlage (2,4; 2,41 bzw. 2,3; 2,31) für den abgesetzten und konzentrierten Belebtschlamm im Nachklärbekken (3) zu sowohl Reaktionsbecken (1; 1,1) als auch Belüftungsbecken (2; 2,1),
einer Zuführeinrichtung (1, 9) mit Zweigleitungen (1,2; 1,21 bzw. 1,3; 1,31) für das Rohabwasser zu sowohl Reaktionsbecken (1; 1,1) als auch Belüftungsbecken (2; 2,1) und
einer Überleitvorrichtung zwischen Reaktionsbecken (1; 1,1) und Belüftungsbecken (2; 2,1), dadurch gekennzeichnet,
daß zumindest zwei je ein Reaktionsbecken (1;

1,1) und ein Belüftungsbecken (2; 2,1) aufweisende Anlagenteile (10; 10,1) einschließlich der jeweiligen Rohwasserzuführ-Zweigleitungen (1,2; 1,3; 1,21; 1,31), Belebtschlammrückführ-Zweigleitungen (2,3; 2,4; 2,31; 2,41) und Belüftungsvorrichtungen (9; 18; 1,6; 2,5; 2,8; 9,1; 18,1; 1,61; 2,51; 2,81) parallel vorgesehen sind, und daß eine Belüftungsluft-Verteileinrichtung (11; 12; 12,1; 13; 13,1; 14; 15; 16; 17) vorgesehen ist, die die Belüftungsluft intermittierend in einem insbesondere abhängig vom O$_2$-Gehalt im Belüf-tungsbecken (2; 2,1) steuerbaren Belüftungszeit/Belüftungspausen-Verhältnis den Anlagenteilen (10; 10,1) zuführen kann.

4. Abwasserreinigungsanlage nach Anspruch 3, dadurch gekennzeichnet, daß das Belüftungsbecken (2; 2,1) das Reaktionsbecken (1; 1,1) ringförmig umschließt und/oder die Vorrichtung zum Belüften sowie zum Inschwebehalten, Umlaufen, Umwälzen und Mischen durch das Reaktionsbecken (1; 1,1) und das Belüftungsbekken (2; 2,1) überspannende umlaufende Brücken (18; 18,1) mit über Luftzuführrohren (2,8; 2,81) daran angeordneten, in Bodennähe des jeweiligen Beckens (1; 1,1; 2; 2,1) befindlichen Belüftern (1,6; 1,61; 2,5; 2,51) gebildet ist.

5. Anlage nach Anspruch 3 oder 4, dadurch gekennzeichnet, daß die Verteileinrichtung ein Zeit/Pausen-Steuergerät (11), dem die O$_2$-Füh-lerausgangssignale zuführbar sind, eine Verdichtereinheit (15—17) und einen Druckluftstoß-Dämpfer (14) enthält, und daß die größten Mengen der Belüftungsluft durch das Zeit/Pausen-Steuergerät (11) entsprechend der Rohabwasserverschmutzung, Rohabwassermenge, Rohabwassertemperatur und jahreszeitlich bedingten Witterungseinflüssen und der erstrebten Reinigung aufeinanderfolgend in den einen Anlagenteil (10) und den anderen Anlagenteil (10,1) mit geeigneter Belüftungszeit bzw. Belüf-tungspause steuerbar sind.

6. Abwasserreinigungsanlage nach einem der Ansprüche 3 bis 5, dadurch gekennzeichnet, daß zur größeren Betriebssicherheit die Verteileinrichtung Bypass-Leitungen (13; 13,1) enthält, durch die zur Vermeidung von Verstopfungen die Belüfter (1,6; 1,61) laufend mit einer geringen Luftmenge versorgt sind.

7. Abwasserreinigungsanlage nach einem der Ansprüche 3 bis 6, dadurch gekennzeichnet, daß die Verdichtereinheit mehrstufig ist, wobei in der schwächsten Stufe für extrem geringe Belastung, vorzugsweise für den Nachtzufluß, nur so viel Luft förderbar ist, daß ein vorbe-stimmter, minimaler O$_2$-Gehalt erreicht und ständig aufrechterhalten wird.

8. Abwasserreinigungsanlage nach einem der Ansprüche 3 bis 7, dadurch gekennzeichnet, daß die Verdichtereinheit mehrere Kompressoren (15, 16, 17) enthält, wobei die Menge der geförderten Luft durch Zu- oder Abschalten eines oder mehrerer Kompressoren (15, 16, 17) bis zum Erreichen eines vorbestimmten O$_2$-Ge-haltes in den Belüftungsbecken (2; 2,1) steuerbar ist.

9. Abwasserreinigungsanlage nach einem der Ansprüche 3 bis 8, gekennzeichnet durch eine kurzzeitige Vorentschlammung zum Ausscheiden des gröbsten Rohschlammes.

10. Abwasserreinigungsanlage nach einem der Ansprüche 3 bis 9, gekennzeichnet durch gleich große Anlagenteile (10; 10,1), denen im wesentlichen gleiche Mengen an Rohabwasser zuführbar sind.

## Claims

1. A process for sewage purification by means of activated sludge, wherein the raw sewage to be purified is fed successively to a reaction tank effecting aeration, to an aeration tank also effecting aeration, and to a final clarification tank, a portion of the raw sewage feedable directly to the aeration tank, wherein settled and concentrated activated sludge is returned from the final clarification tank partly to the reaction tank and partly to the aeration tank, and wherein the mixture in the reaction tank and the mixture in the aeration tank is caused to make a rotative motion and is aerated and circulated dependent on the $O_2$ content and wherein in the reaction tank the activated sludge is circulated and thickened in the lower layers, characterized in that, at least two plant sections are provided in parallel, each containing a reaction tank and an aeration tank and that, in otherwise parallel operation, said plant sections are aerated intermittently.

2. A process according to claim 1, characterized in that the plant sections are supplied with varying amounts of aeration air, depending on the raw sewage contamination, the quantity of raw sewage, the raw sewage temperature, and the seasonal meteorological conditions.

3. A sewage purification plant for carrying out the process according to one of the claims 1 and 2, having
a raw sewage influent pipe (8),
a reaction tank (1 resp. 1,1) provided with means for aeration dependent on the $O_2$ content,
an aeration tank (2 resp. 2,2) provided with means for aeration dependent on the $O_2$ content,
a final clarification tank (3),
an effluent pipe (10,5) for the clarified sewage from the final clarification tank (3),
a return device (4) with conveying plant (2,4; 2,41 resp. 2,3; 2,31) for the settled and concentrated activated sludge in the final clarification tank (3) to the reaction tank (1; 1,1) as well as to the aeration tank (2; 2,1),
and a supply device (1,9) having branch conduits (1,2; 1,21 resp. 1,3; 1,31) for the raw sewage to the reaction tank (1; 1,1) as well as to the aeration tank (2; 2,1),
and a conveyance device between the reaction tank (1; 1,1) and the aeration tank (2; 2,1), characterized in that,
at least two plant sections (10; 10,1), each having a reaction tank (1; 1,1) and an aeration tank (2; 2,1), including the associated raw sewage branch conduits (1,2; 1,3; 1,21; 1,31), activated-sludge-return branch conduits (2,3; 2,4; 2,31; 2,41) and aeration devices (9; 18; 1,6; 2,5; 2,8; 9,1; 18,1; 1,61; 2,51; 2,81) are provided in parallel,
and that an aeration-air distributor device (11; 12; 12,1; 13; 13,1; 14; 15; 16; 17) is provided which can supply the aeration air intermittently to the plant section (10; 10,1), in a ratio between the periods of aeration and no-aeration, said ratio being controllable particularly dependent on the $O_2$ content in the aeration tank (2; 2,1).

4. The sewage purification plant according to claim 3, characterized in that the aeration tank (2; 2,1) surrounds the reaction tank (1; 1,1) in the form of a ring and/or the device for aeration as well as for the suspension, rotation, circulation, and mixing, is formed by rotary bridges (18; 18,1), spanning the reaction tank (1; 1,1) and the aeration tank (2; 2,1), with aerators (1,6; 1,61; 2,5; 2,51) arranged thereon over air-supply pipes (2,8; 2,81) and located near the bottom of the associated tank (1; 1,1; 2; 2,1).

5. The plant according to claim 3 or 4, characterized in that the distributor device comprises a control device (11) regulating the aeration/no-aeration periods to which are fed the $O_2$ sensor output signals, a compressor unit (15—17), and a compressed-air shock absorber (14), and that the largest quantities of aeration air can be steered with appropriate aeration and no-aeration periods by said control device (11) in accordance with the raw sewage contamination, the quantity of raw sewage, the raw sewage temperature, the seasonally conditioned meteorological influences, and the desired purification sequentially into one (10) and the other (10,1) plant section.

6. The sewage purification plant according to one of the claims 3 to 5, characterized in that for greater operating safety the distributor device contains by-passes (13; 13,1) through which the aerators (1,6; 1,61) are continuously supplied with a small quantity of air in order to prevent clogging.

7. The sewage purification plant according to one of the claims 3 to 6, characterized in that the compressor unit is multistage and in the weakest stage for an extremely light load, preferably for the night supply only so much air can be conveyed that a predetermined minimum $O_2$ content attained and continuously maintained.

8. The sewage purification plant according to one of the claims 3 to 7, characterized in that the compressor unit has a plurality of compressors (15, 16, 17) in which the amount of the delivered air can be controlled by switching on or off one or more compressors (15, 16, 17) until a prespecified $O_2$ content is attained in the aeration tanks (2; 2,1).

9. The sewage purification plant according to one of the claims 3 to 8, characterized by a brief pre-desludging process in order to remove the coarsest raw sludge.

10. The sewage purification plant according to one of the claims 3 to 9, characterized by equally large plant sections (10; 10,1) to which essentially equal quantities of raw sewage can be fed.

## Revendications

1. Procédé d'épuration d'eaux usées au moyen de boue activée dans lequel on amène successivement les eaux usées brutes à épurer à un bassin de réaction comportant une aération, à un bassin d'aération comportant une aération et à un clarificateur secondaire, une partie des eaux usées brutes étant amenable directement au bassin d'aération, on ramène, dudit clarificateur secondaire, de la boue activée déposée et concentrée partie au bassin de réaction, partie au bassin d'aération, on met en rotation et, en fonction de la teneur en $O_2$, aère et remue sur eux-mêmes le mélange du bassin de réaction et le mélange du bassin d'aération et on remue sur elle-même et épaissit, dans le bassin de réaction, la boue activée des couches inférieures, caractérisé par le fait qu'on prévoit en parallèle au moins deux parties d'installation renfermant chacune un bassin de réaction et un bassin d'aération et que, avec un fonctionnement par ailleurs parallèle, on aère lesdites parties d'installation par intermittence.

2. Procédé selon la revendication 1 caractérisé par le fait qu'on alimente chaue fois les parties d'installation par des quantités d'air d'aération différentes en fonction de la souillure, la quantité et la température des eaux usées brutes ainsi que d'influences atmosphériques saisonnières.

3. Installation d'épuration d'eaux usées pour la mise en œuvre du procédé selon l'une des revendications 1 et 2, avec une amenée d'eaux usées brutes (8), un bassin de réaction (1; 1.1) muni de dispositifs pour l'aération en fonction de la teneur en $O_2$, un bassin d'aération (2; 2.1) muni de dispositifs pour l'aération en fonction de la teneur en $O_2$, un clarificateur secondaire (3), une conduite d'écoulement (10.5), hors du clarificateur secondaire (3), des eaux usées clarifiées, un dispositif de retour (4), avec installation de transport (2.4, 2.3; 2.41, 2.31), pour la boue activée déposée et concentrée du clarificateur secondaire (3) aussi bien vers le bassin de réaction (1; 1.1) que vers le bassin d'aération (2; 2.1), un dispositif d'amenée (1.9), avec des dérivations (1.2, 1.3; 1.21, 1.31) pour les eaux usées brutes aussi bien vers le bassin de réaction (1; 1.1) que vers le bassin d'aération (2; 2.1), et un dispositif de transfert entre le bassin de réaction (1; 1.1) et le bassin d'aération (2; 2.1), caractérisée par le fait qu'y sont prévues en parallèle au moins deux parties d'installation (10; 10.1) comportant chacune un bassin de réaction (1; 1.1) et un bassin d'aération (2; 2.1), y compris pour chacune d'elles les dérivations d'amenée d'eaux usées brutes (1.2, 1.3; 1.21, 1.31), les dérivations de retour de boue activée (2.3, 2.4; 2.31, 2.41) et les dispositifs d'aération (9, 18, 1.6, 2.5, 2.8; 9.1, 18.1, 1.61, 2.51, 2.81) et qu'il y est prévu un dispositif distributeur d'air d'aération (11, 12, 13, 14, 15, 16, 17; 11, 12.1, 13.1, 14, 15, 16, 17) qui peut amener par intermittence l'air d'aération aux parties d'installation (10; 10.1) dans un rapport entre temps d'aération et pauses d'aération commandable notamment en fonction de la teneur en $O_2$ dans le bassin d'aération (2; 2.1).

4. Installation d'épuration d'eaux usées selon la revendication 3 caractérisée par le fait que le bassin d'aération (2; 2.1) entoure en anneau le bassin de réaction (1; 1.1) et/ou que le dispositif d'aération ainsi que de maintien en suspension, mise en rotation, agitation et mélange est formé par des ponts tournants (18; 18.1) qui surmontent le bassin de réaction (1; 1.1) et le bassin d'aération (2; 2.1) et comportent des aérateurs (1.6, 2.5; 1.61, 2.51) placés à proximité du fond de chaque bassin (1, 2; 1.1, 2.1) et disposés sur lesdits ponts au-dessus de tubes d'amenée d'air (2.8; 2.81).

5. Installation d'épuration d'eaux usées selon la revendication 3 ou 4 caractérisée par le fait que le dispositif distributeur renferme un appareil de commande (11) du rapport entre le temps et les pauses d'aération auquel les signaux de sortie des palpeurs d'oxygène sont amenables, une unité de compression (15—17) et un amortisseur d'à-coups d'air comprimé (14) et que les quantités maximales de l'air d'aération sont commandables successivement vers l'une des parties d'installation (10) et vers l'autre (10.1), avec une durée d'aération ou une pause d'aération appropriées, par l'appareil de commande (11) du rapport entre le temps et les pauses d'aération conformément à la souillure, la quantité et la température des eaux usées brutes, à des influences météorologiques saisonnières et à l'épuration recherchée.

6. Installation d'épuration d'eaux usées selon l'une des revendications 3 à 5 caractérisée par le fait que, en vue du maximum de sécurité de fonctionnement, le dispositif distributeur renferme des conduites dérivées (13; 13.1) par lesquelles les aérateurs (1.6; 1.61) sont constamment alimentés en une faible quantité d'air afin d'éviter des engorgements.

7. Installation d'épuration d'eaux usées selon l'une des revendications 3 à 6 caractérisée par le fait que l'unité de compression comporte plusieurs étages et que dans l'étage le plus faible, pour charge extrêmement basse, de préférence pour l'amenée de nuit, il ne peut être transporté qu'une quantité d'air suffisante pour que l'on atteigne et maintienne constamment une teneur en $O_2$ minimale prédéterminée.

8. Installation d'épuration d'eaux usées selon l'une des revendications 3 à 7 caractérisée par le fait que l'unité de compression comporte plusieurs compresseurs (15, 16, 17) et que la quantité d'air transportée est commandable par mise en circuit ou hors circuit d'un ou de plusieurs compresseurs (15, 16, 17) jusqu'à ce que l'on atteigne une teneur en $O_2$ prédéterminée dans le bassin d'aération (2; 2.1).

9. Installation d'épuration d'eaux usées selon l'une des revendications 3 à 8 caractérisée par un dévasage préalable de courte durée pour l'élimination de la boue brute la plus grossière.

10. Installation d'épuration d'eaux usées selon l'une des revendications 3 à 9 caractérisée par des parties d'installation (10; 10.1) de même grandeur auxquelles sont amenables des quantités essentiellement égales d'eaux usées brutes.